# EUROPEAN PATENT SPECIFICATION

(11) **EP 1 453 633 B1**
(45) Date of publication and mention of the grant of the patent: **16.10.2013**
(21) Application number: 02785878.6
(22) Date of filing: 06.11.2002
(51) Int. Cl.: B23C 5/10

(54) **Rotary milling cutter**
Rotierendes Fräswerkzeug
Fraise rotative

(30) Priority: 06.11.2001 IL 14637001
(43) Date of publication of application: 08.09.2004
(73) Proprietor: Hanita Metal Works Ltd., 22832 Shlomi Industrial Area (IL)
(72) Inventor: VOLOKH, Vladimir, 21061 Ma'alot (IL)
(74) Representative: Prinz & Partner
(86) International application number: PCT/IL2002/000888
(87) International publication number: WO 2003/039797

(56) References cited:
- WO-A1-94/23875
- FR-A1- 2 649 341
- GB-A- 2 026 915
- JP-A- 6 335 813
- US-A- 4 212 568
- US-A- 4 215 955
- US-A- 4 560 308

## Description

The present invention relates to tools for the machining of materials by milling. More particularly, the invention provides an improved form for a rotary cutting tool such as an end-mill, configured to extend tool life while increasing metal removal rates.

End-mills are widely used in milling operations due to their versatile range of application and due to the moderate first cost of the tool. End-mills are often of cylindrical shape, and are available up to about 80 mm diameter. Many end mills have flat ends; however other shapes such as conical and rounded ends are also used. An end-mill typically has 2 to 10 teeth, depending on diameter size and whether for rough cutting or finishing. Teeth are usually of spiral shape, but can be straight and parallel to the axis. Material of construction is high speed steel, solid carbide, cermet or ceramic, or combinations thereof.

It has long been known that in many machining operations end-mill performance is improved by serration of the cutting edge. Cutters of this type are listed in tool catalogues and are available off the shelf. There is however no consensus regarding the optimum form of said serration. A common form is the sine wave, this being one of the forms suggested by Wale in US 4,764,059, which discloses a helical inserted-blade cutter. A short pitch serration is seen on the Nicked Cutting Tool disclosed by Nishimura in US 5,193,944.

A sine wave shape has theoretically no straight section at all, although in practice a small section at the 180 degree point is almost straight. When meeting a flat surface, contact between the sine wave and flat surface is therefore concentrated at a point. Such contact produces extreme pressure when the flat surface is a hard workpiece and the sine wave is a form imposed on the cutting edge of an end-mill tooth. It is reasonable to conclude that this point contact is responsible for shortening the life of this type of cutting tool.

The International Patent Application WO 94/23875 discloses a cutter tool where the cutting edge of is made up of a repeated waveform. The waveform has a steep edge ending in a corner, which first cuts into the workpiece. The cutting edge then undergoes a sudden change into a straight region at the leading part of the cutting edge. The leading part of the cutting edge is linear and extends at an angle of between 1 ° and 30° with respect to the axis of rotation of the tool.

FR 2 649 341 discloses a rotary multi-tooth cutter having an edge at the forward direction of each tooth which is provided along the length of each tooth with a repeated waveform, each waveform comprising three substantially straight interconnected cutting sections, all at different angles with respect to each other and with respect to the cutter tool axis. The edge of the tooth has a constant distance R from the rotation axis of the tool.

It is therefore one of the objects of the present invention to obviate the disadvantages of prior art cutting tools and to provide a cutter which makes line contact with the workpiece while yet retaining the advantages, such as improved chip disposal, of the serrated tooth form.

According to the present invention, a mult-tooth cutter is provided as defined in claim 1.

According to the present invention a third section of an edge of the cutter is substantially parallel to the tool axis.

In a preferred embodiment of the present invention there is provided a cutter configured for use in the machining of hard metals, wherein the third section has a length of about 15% to 40% of the pitch of the repeated wave.

The present invention provides significant improvement in cutting action and longer tool life because the profile of the cutting edge is optimized in accordance with cutting tool material, work piece material, and cutting conditions such as high speed or conventional cutting.

A single pitch of the repeated wave form contains the following sections. A linear portion ( c ) is disposed at 0 degrees helix angle. This portion first penetrates the work piece along its whole length at one time. Pressure at the penetration area is lower in comparison with cutters having point penetration. Cutting forces are lower than with tools making point contact with the workpiece. Located at the sides of the linear portion ( c ) are a right hand helix portion (d) and a left hand helix portion (a). Portion (b) has a larger left hand helix angle than portion (a). The four portions (a b c d), which are linked by radii, comprise 1 pitch of the repeated waveform.

The resulting geometry assures line penetration, which exerts lower local forces on the cutting tool than point penetration. The length of the linear portion ( c ), the pitch and other dimensions can be determined by the material to be machined (hard steels, medium and soft hardened steels, stainless steel, high temperature alloys, titanium, aluminium) as well as cutting tool material (High speed steel, solid carbide, ceramics) and machining conditions.

Tool life is extended and chips are produced which are easily evacuated.

It will thus be realized that the novel cutter of the present invention is provided with a profile wherein a third section of the repeating wave form makes line contact with a workpiece to greatly reduce impact pressure during machining. The achieved cutting pressure reduction reduces cutter wear, lengthens tool life and increases possible metal removal rates.

The length of said third section can be selected after consideration of the machinability of the material to be machined. For soft metals such as copper and aluminium the third section can be short, about 8% to 20% of the wave pitch. Where hard metals, alloy or stainless steels for example are to be machined, the third section is substantially longer, typically around 15 to 40% of the wave pitch.

For roughing cutters, expected to remove material at the highest possible rate, there is provided an embodiment wherein an additional wave form is imposed on the relief surface of the tooth.

### Description of Drawings

The invention will now be described further with reference to the accompanying drawings, which represent by example preferred embodiments of the invention. Structural details are shown only as far as necessary for a fundamental understanding thereof. The described examples, together with the drawings, will make apparent to those skilled in the art how further forms of the invention may be realized.

In the drawings:
FIG. 1 is a perspective, non-detailed view of a preferred embodiment of the cutter,
FIG. 2 is an enlarged view of one pitch of the repeated wave profile ground in each of the cutter teeth;
FIG. 3 and 4 are a detail perspective view of an embodiment wherein the wave form extends also over the relief surface;
FIG. 5 is a table providing a numerical example of the wave-form suitable for machining mild steel; and
FIG. 6 is a detail perspective of a cutter wherein each tooth has a wave-form imposed on its rake surface, with an additional concave portion.

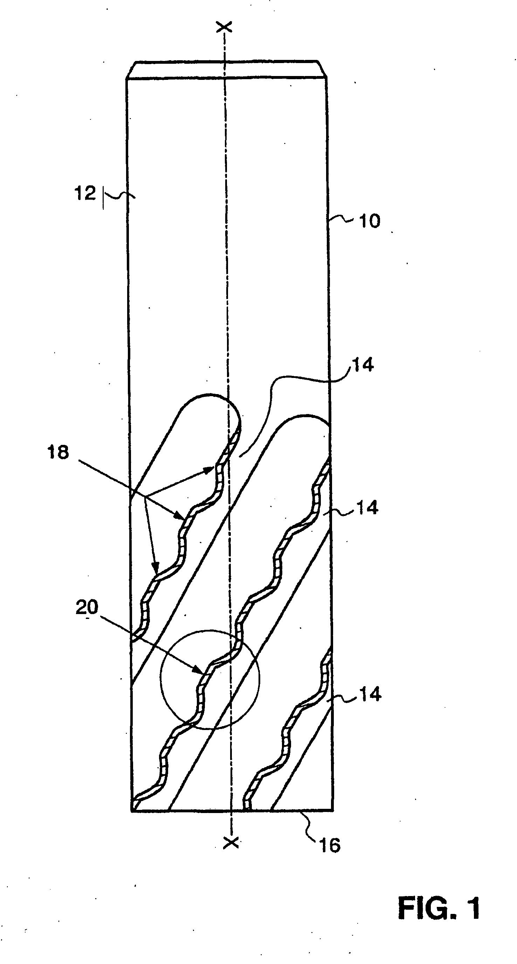

There is seen in FIG. 1 a rotary multi-tooth cutter 10, having a shank 12, a plurality of teeth 14 and a tip 16. The cutting edge 18 of each tooth is provided along its length with a repeated wave form 20. The cutter 10 shown is in the form of an end mill. Typically the cutter 10 is made of conventional materials, high speed steel, tungsten carbide, or combinations thereof. The teeth 14 can, as prior-art cutters, be coated with a prior-art thin hard coating, for example of titanium nitride, to prolong tool life.

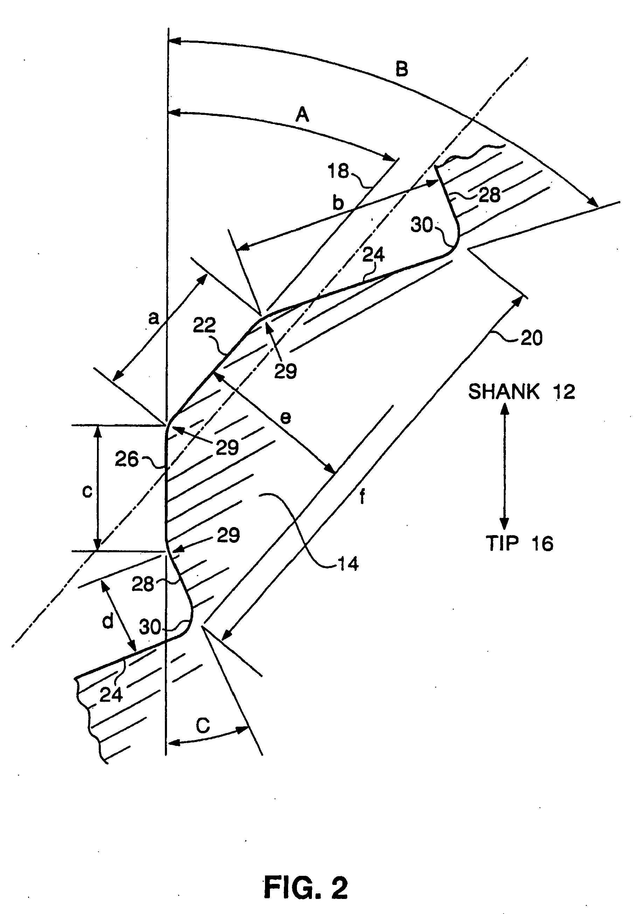

Referring now to FIG. 2, there is seen on a large scale a single pitch of the repeated wave form 20, its length designated by the letter f. The wave form 20 comprises of four substantially straight sections 22, 24, 26, 28 interconnected by radii 29.

A first section 22 is identical with the unmodified cutting edge, i.e. runs along the helix angle A. Its length is designated by the arrow a.

A second section 24, its length marked by the arrow b, adjoins the first section 22 on a side nearer the tool shank 12. The second section 24 also serves as a cutting edge and extends at an angle B-A to the first section, in rearward direction into the tooth 14. A third section 26, its length marked by the arrow c, also adjoins the first section 22, but on a side nearer the tool tip 16. The third section 26 extends at an angle A to the first section into the tooth. The third section 26 is also a cutting edge. Advantageously the third section 26 is parallel to the tool axis XX seen in FIG. 1. A fourth section 28 is a relief section and is not used as a cutting edge. The fourth section 28 - its length designated by the letter d, is connected to the third section 26, and extends into the cutter tooth 14 at an angle C. As angle C is always positive, the fourth section 28 extends into the tooth 14 at an angle greater than does the third section 26.

A root radius 30, marked by arrow r, connects the fourth section 28 to the adjoining second section 24 of the adjacent wave. Total wave depth (amplitude) is designated by arrow e.

The following are preferred relationships which form the basis of the special profile described.
* The pitch of the repeated wave form 20, f, exceeds 15% of the cutter diameter.
* The amplitude, e, of the repeated wave form 20 is less than 25% of the pitch of the repeated wave.
* Where soft metals are to be machined, the third section 26 has a length of about 8% to 20% of the pitch of the repeated wave.
* Where hard metals are to be machined, the third section 26 has a length of about 15% to 40% of the pitch of the repeated wave.

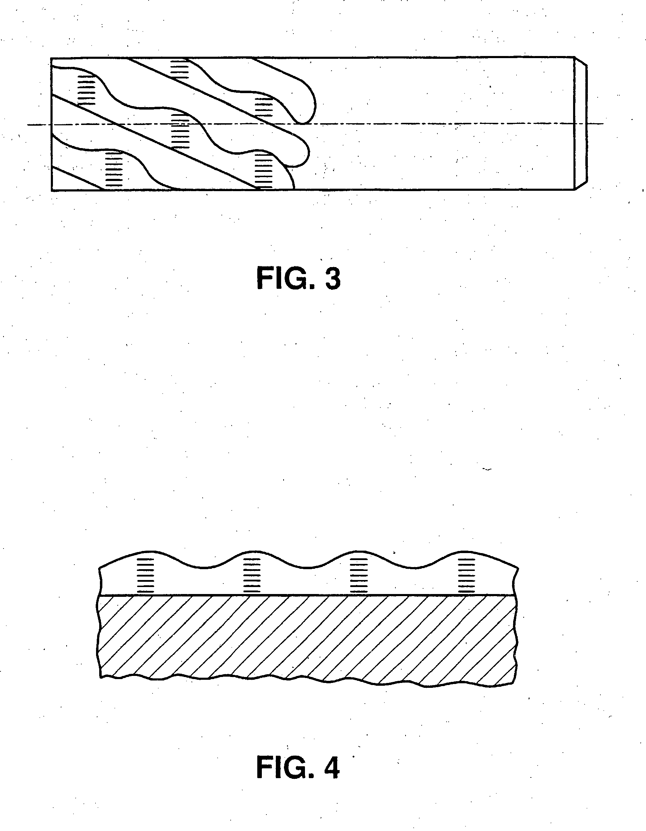

Figs. 3 and 4 illustrate a segment of an end-mill tooth 14, wherein the repeated wave form 20 is on the relief face and the rake surface (seen in FIG. 1) of each tooth 14. The peaks and valleys on the rake surface and the peaks and valleys on the relief surface have the same location along the cutting edge.

This is particularly advantageous in roughing tools, as higher rates of metal removal can be achieved thereby.

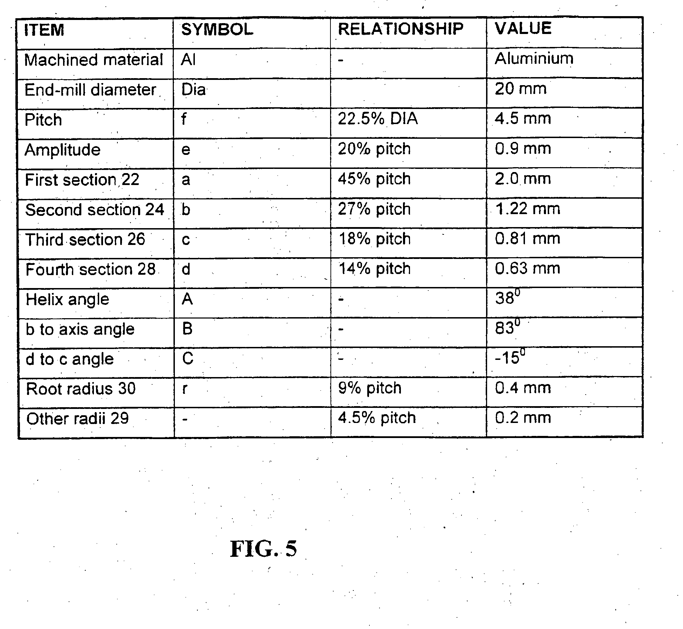

Referring now to FIG. 5, there is given a numerical example, wherein a 20 mm diameter end-mill is to be used to machine aluminium.

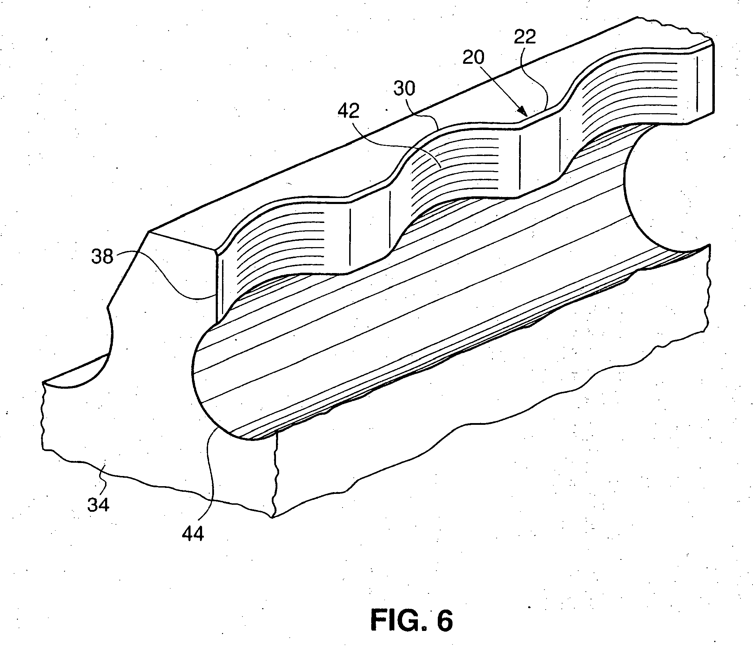

FIG. 6 shows a cutter intended for minimum contact of chips with the rake surface and better chip evacuation.

The helical tooth 34 is shown as if it were straight for illustrative purposes.

Each tooth 34 has a wave-form imposed on its rake surface 38 according to the wave form 20 of the cutting edge.

A concave portion 44, without repeated wave-form, connects the rake surface 38 to the root of the tooth 34 and relief wave form of the adjacent tooth.

The described invention is intended to include all embodiments. The foregoing examples illustrate useful forms of the invention, but are not to be considered as limiting , as those skilled in the art will readily be aware that additional variants and modifications of the invention can be formulated without departing from the scope as defined by the appended claims.

## Claims

1. A rotary multi-tooth cutter having an edge (18) at the forward direction of each tooth (14) which is provided along the length of each tooth (14) with a repeated waveform (20), each said waveform (20) comprising four substantially straight sections interconnected by radii,
a first cutting section (22) being a cutting edge disposed along the helix angle (A) of the tooth (14),
a second cutting section (24) adjoining said first section (22) on a side nearer the tool shank (12) and extending at an angle to said first section (22) in the rearward direction of the tooth,
a third cutting section (26) adjoining said first section (22) on a side nearer the tool tip (16) and extending at an angle to said first section (22) in the rearward direction of the tooth, such that said third cutting section (26) is substantially parallel to the cutter tool axis (X), and
a fourth section (28) as a relief section connected to said third section (26) and extending in the rearward direction of the tooth at an angle greater than said third section (26), wherein a root radius (30) connects said fourth section (28) to the adjoining second section of the next adjacent waveform.

2. The cutter according to claim 1, wherein said repeated waveform (20) extends on a relief surface (38) and a rake surface, and wherein the peaks and valleys of the waveform (20) on the relief surface (38) and the rake surface have the same location as those along forward edge (18).

3. The cutter according to claim 1 or 2, wherein the pitch (f) of said repeated waveform (20) exceeds 7% of the cutter diameter.

4. The cutter according to claim 1, 2 or 3, wherein the amplitude (e) of said repeated waveform (20) is less than 25% of the pitch (f) of the repeated waveform.

5. The cutter according to any one of the claims 1 to 4, wherein said third cutting section (26), for use in the machining of soft metals, has a length of about 8% to 20% of the pitch (f) of the repeated waveform.

6. The cutter according to any one of the claims 1 to 4, wherein said third cutting section (26), for use in the machining of hard metals, has a length of about 8% to 40% of the pitch (f) of the repeated waveform.

7. The cutter according to any one of the claims 1 to 6, wherein the repeated waveform (20) of each tooth (14) extends onto a rake surface, said rake surface having an additional concave portion (44) without the shape of the repeated waveform (20).

## Patentansprüche

1. Rotierendes Mehrzahn-Fräswerkzeug mit einer Kante (18) in der Vorwärtsrichtung jedes Zahns (14), die entlang der Länge jedes Zahns (14) mit einer wiederholten Wellenform (20) versehen ist, wobei jede Wellenform (20) vier im Wesentlichen gerade Teilabschnitte aufweist, die durch Radien miteinander verbunden sind,
wobei ein erster Frästeilabschnitt (22) eine Fräskante ist, die entlang des Helixwinkels (A) des Zahns (14) angeordnet ist,
wobei ein zweiter Frästeilabschnitt (24) auf einer Seite, die dem Werkzeugschaft (12) näher ist, an den ersten Teilabschnitt (22) angrenzt und in einem Winkel zum ersten Teilabschnitt (22) in der Rückwärtsrichtung des Zahns verläuft,
wobei ein dritter Frästeilabschnitt (26) auf einer Seite, die der Werkzeugspitze (16) näher ist, an den ersten Teilabschnitt (22) angrenzt und in einem Winkel zum ersten Teilabschnitt (22) in der Rückwärtsrichtung des Zahns verläuft, sodass der dritte Frästeilabschnitt (26) im Wesentlichen parallel zur Fräswerkzeugachse (X) ist, und
wobei ein vierter Teilabschnitt (28) mit dem dritten Teilabschnitt (26) als Rücknahmeabschnitt verbunden ist und in der Rückwärtsrichtung des Zahns in einem Winkel verläuft, der größer als der dritte Teilabschnitt (26) ist, wobei ein Fußradius (30) den vierten Teilabschnitt (28) mit dem angrenzenden zweiten Teilabschnitt der nächsten benachbarten Wellenform verbindet.

2. Fräswerkzeug nach Anspruch 1, wobei sich die wiederholte Wellenform (20) auf eine Rücknahmefläche (38) und eine Schneidbrustfläche erstreckt, und wobei die Scheitel und Täler der Wellenform (20) an der Rücknahmefläche (38) und der Schneidbrustfläche denselben Standort wie jene entlang der Vorderkante (18) aufweisen.

3. Fräswerkzeug nach einem der Ansprüche 1 oder 2, wobei die Steigung (f) der wiederholten Wellenform (20) 7% des Fräswerkzeugdurchmessers übersteigt.

4. Fräswerkzeug nach einem der Ansprüche 1, 2 oder 3, wobei die Weite (e) der wiederholten Wellenform (20) geringer als 25% der Steigung (f) der wiederholten Wellenform ist.

5. Fräswerkzeug nach einem der Ansprüche 1 bis 4, wobei der dritte Frästeilabschnitt (26) zum Gebrauch beim maschinellen Bearbeiten von weichen Metallen eine Länge von ungefähr 8% bis 20% der Steigung (f) der wiederholten Wellenform aufweist.

6. Fräswerkzeug nach einem der Ansprüche 1 bis 4, wobei der dritte Frästeilabschnitt (26) zum Gebrauch beim maschinellen Bearbeiten von harten Metallen eine Länge von ungefähr 8% bis 40% der Steigung (f) der wiederholten Wellenform aufweist.

7. Fräswerkzeug nach einem der Ansprüche 1 bis 6, wobei sich die wiederholte Wellenform (20) jedes Zahns (14) auf eine Schneidbrustfläche erstreckt, wobei die Schneidbrustfläche einen zusätzlichen konkaven Abschnitt (44) ohne die Form der wiederholten Wellenform (20) aufweist.

## Revendications

1. Fraise rotative à dents multiples comportant une arête (18) dans la direction avant de chaque dent (14) qui est située le long de la longueur de chaque dent (14) avec une forme sinusoïdale (20) répétée, chaque dite forme sinusoïdale (20) comprenant quatre sections pratiquement droites raccordées entre elles par des rayons,
une première section de coupe (22) étant une arête de coupe disposée le long de l'angle d'hélice (A) de la dent (14),
une deuxième section de coupe (24) adjacente à ladite première section (22) sur un côté plus proche de la queue d'outil (12) et s'étendant à un angle par rapport à ladite première section (22) dans la direction arrière de la dent,
une troisième section de coupe (26) adjacente à ladite première section (22) sur un côté plus proche de la pointe d'outil (16) et s'étendant à un angle par rapport à ladite première section (22) dans la direction arrière de la dent, de telle sorte que ladite troisième section de coupe (26) est pratiquement parallèle à l'axe de l'outil (X) de la fraise, et
une quatrième section (28) formant une section de dépouille raccordée à ladite troisième section (26) et s'étendant dans la direction arrière de la dent à un angle supérieur à celui de la troisième section (26), un rayon à fond de filet (30) raccordant ladite quatrième section (28) à la deuxième section adjacente de la forme sinusoïdale adjacente suivante.

2. Fraise selon la revendication 1, ladite forme sinusoïdale (20) répétée s'étendant sur une surface de dépouille (38) et une surface d'attaque, et les sommets et les vallées de la forme sinusoïdale (20) sur la surface de dépouille (38) et la surface d'attaque étant situés aux mêmes emplacements que ceux se trouvant le long de l'arête avant (18).

3. Fraise selon la revendication 1 ou 2, le pas (f) de ladite forme sinusoïdale (20) répétée ayant une valeur excédant 7 % du diamètre de la fraise.

4. Fraise selon la revendication 1, 2 ou 3, l'amplitude (e) de ladite forme sinusoïdale (20) répétée ayant une valeur inférieure à 25 % du pas (f) de la forme sinusoïdale répétée.

5. Fraise selon l'une quelconque des revendications 1 à 4, ladite troisième section de coupe (26), servant à l'usinage de métaux doux, ayant une longueur correspondant à environ 8 % à 20 % du pas (f) de la forme sinusoïdale répétée.

6. Fraise selon l'une quelconque des revendications 1 à 4, ladite troisième section de coupe (26), servant à l'usinage de métaux durs, ayant une longueur correspondant à environ 8 % à 40 % du pas (f) de la forme sinusoïdale répétée.

7. Fraise selon l'une quelconque des revendications 1 à 6, la forme sinusoïdale (20) répétée de chaque dent (14) s'étendant sur une surface d'attaque, ladite surface d'attaque comportant une partie concave supplémentaire (44) ne présentant pas la forme sinusoïdale (20) répétée.
